Europäisches Patentamt

European Patent Office

Office européen des brevets

(11) Veröffentlichungsnummer: **0 098 920**
**A1**

(19)

(12) **EUROPÄISCHE PATENTANMELDUNG**

(21) Anmeldenummer: 83102817.0

(22) Anmeldetag: 22.03.83

(51) Int. Cl.³: **G 01 B 7/315**
**G 01 S 15/88**

(30) Priorität: **10.07.82 DE 3225899**

(43) Veröffentlichungstag der Anmeldung:
**25.01.84 Patentblatt 84/4**

(84) Benannte Vertragsstaaten:
**CH DE FR GB IT LI NL SE**

(71) Anmelder: Wegmann & Co. GmbH
August-Bode-Strasse 1
D-3500 Kassel(DE)

(72) Erfinder: Schrammen, Peter, Dr.
Korbacher Strasse 247
D-3500 Kassel(DE)

(72) Erfinder: Schürg, Bernd, Dipl.-Ing.
Baunsbergstrasse 8
D-3501 Fuldabrück(DE)

(72) Erfinder: Wagner, Johann, Dr.-Ing.
Händelstrasse 29
D-3502 Vellmar(DE)

(74) Vertreter: Feder, Heinz, Dr. et al,
Dominikanerstrasse 37
D-4000 Düsseldorf 11(DE)

(54) Vorrichtung zur Vermessung der Radebenen von Kraftfahrzeugen.

(57) Vorrichtung zur Vermessung der Radebenen von Kraftfahrzeugen durch die Messung des Abstandes eines ausgewählten Punktes oder mehrerer ausgewählter Punkte am Rad von einer prüfstandfesten Referenz, wobei diese Abstandsmessung berührungslos, vorzugsweise durch Ultraschall, erfolgt. Ultraschallsender (3) werden am Rad mittels eines Meßkopfhalters (1) befestigt und als prüfstandfeste Referenz dienen entweder fest angeordnete Schallempfänger (4) oder eine schallreflektierende Wand, wobei die Schallempfänger ebenfalls am Meßkopfhalter angeordnet sind. Der Meßkopfhalter ist vorzugsweise an einem Arm (5) drehbar, schwenkbar und gegebenenfalls axial verschiebbar angeordnet und wird durch diesen Arm auf das Rad aufgesetzt. Durch eine Antriebs (14, 15) und Winkelmeßvorrichtung (9) kann das Rad um einen definierten Winkel gedreht werden. Bei Verwendung mehrerer Schallsender werden diese zeitlich nacheinander erregt und die Signale jeweils von allen Schallempfängern empfangen. Sämtliche Meßwerte werden an einen Rechner gemeldet und von diesem ausgewertet.

FIG.1

EP 0 098 920 A1

Vorrichtung zur Vermessung der Radebenen von Kraftfahrzeugen.

Es sind Vorrichtungen bekannt zur genauen Vermessung der Radebenen von Kraftfahrzeugen, um die Neigung
der Radebenen in senkrechter und waagerechter Richtung
zu messen und auf diese Weise festzustellen, ob Spur,
Sturz und Nachlauf der Fahrzeugräder innerhalb der
zugelassenen Toleranzgrenzen liegen. Bei diesen bekannten Vorrichtungen sind eine Anzahl z.T. ziemlich komplizierter Arbeiten durchzuführen, so daß die Messung eine
erhebliche Arbeitszeit einer oder mehrerer qualifizierter Arbeitskräfte in Anspruch nimmt.

Zweck der Erfindung ist es, eine Vorrichtung zu schaffen, die die Messungen selbsttätig vornimmt und es
ermöglicht, die Messungen in einem Rechner auszuwerten,
so daß für die Durchführung der Messung keine qualifizierten Arbeitskräfte erforderlich sind.

Die Erfindung geht davon aus, daß der Abstand eines
ausgewählten Punktes oder mehrerer ausgewählter Punkte
am Rad von einer prüfstandfesten Referenz gemessen wird,
wobei gemäß der Erfindung diese Abstandsmessung berührungslos, vorzugsweise durch Ultraschall, erfolgt.

- 2 -

Durch die Abstandsmessung mittels Ultraschall werden Signale erhalten, die an den Rechner gegeben und von diesem ausgewertet werden können.

Die prüfstandfeste Referenz kann nach einer ersten Ausführungsform aus mehreren, insbesondere drei in einer geeigneten Aufnahme sitzenden Schallempfängern bestehen, während am Rad Schallsender angeordnet sind, so daß die von den Schallsendern am Rad ausgesandten Signale von den Schallempfängern aufgenommen werden und auf diese Weise die Abstände zwischen Schallsendern und Schallempfängern ermittelt werden.

Die prüfstandfeste Referenz kann aber auch eine schallreflektierende Wand sein, wobei am Rad Schallsender und Schallempfänger, die jeweils zu einer Sender-Empfängereinheit vereinigt sein können, angeordnet sind. Um die am Rad anzuordnenden Einheiten in genau definierten Abständen anzubringen, sind die Schallsender bzw. die Schallsender- Schallempfänger zweckmäßig an einem Meßkopfhalter angeordnet, der auf das Rad aufsetzbar ist, wobei dieser Meßkopfhalter durch geeignete Befestigungsmittel am Rad, vorzugsweise am Reifen, angeordnet wird. Auch das Anbringen des Meßkopfhalters am Rad erfordert keine Arbeitskraft, wenn dieser Meßkopfhalter an einem Schwenkarm drehbar, schwenkbar und gegebenenfalls axial verschiebbar angeordnet ist, so daß der Meßkopfhalter selbsttätig auf das Rad aufgesetzt werden kann. Der auf diese Weise aufgesetzte und am Rad befestigte Meßkopfhalter wird, da seine Lage zur Radebene nicht definiert ist, eine Taumelbewegung ausführen. Jeder Punkt des Meßkopfhalters, also auch die an diesem angebrachten Schallsender bzw. Schallsender- empfänger bewegt sich aber beim Drehen des Rades auf einem Kreisbogen, dessen Ebene exakt parallel zur Radebene ist. Wird das Rad durch eine Antriebsrolle gedreht und dabei einerseits der Drehwinkel des Rades und andererseits der Abstand des Meßsenders von der Referenz gemessen, so kann daraus die genaue Lage der Radebene errechnet werden. Werden mehrere Schallsender verwendet, so wird aufgrund der Ausbreitung des Schalles dieser auf mehrere Empfänger auftreffen. Damit die Abstände eindeutig ermittelt werden können, können die verschiedenen Schallsender zeitlich nacheinander erregt und die Signale jeweils von allen Schallempfängern empfangen und einzeln ausgewertet werden. Auf diese Weise werden die Entfernungen aller Schallsender von der prüfstandfesten Referenz genau ermittelt,und aus den gemessenen Werten, die an einen Rechner gemeldet werden, kann die Neigung der Radebene zu der prüfstandfesten Referenz errechnet werden. Dabei wird zweckmäßig so verfahren, daß zuerst das Rad um einen bestimmten Winkel gedreht, dabei nur ein Sender betrieben und daraus die Lage der Radebene berechnet wird, worauf dann bei Verwendung mehrerer Meßsender oder Meßempfänger das Rad in eine Lage gebracht wird, in der sich die Sender bzw. Sender-Empfänger in einer waagerechten bzw. senkrechten Ebene befinden, so daß nun Spur-und Sturzwinkeländerungen ohne erneute Raddrehung ermittelt und Spur- und Sturzwinkel rechnergeführt eingestellt werden können.

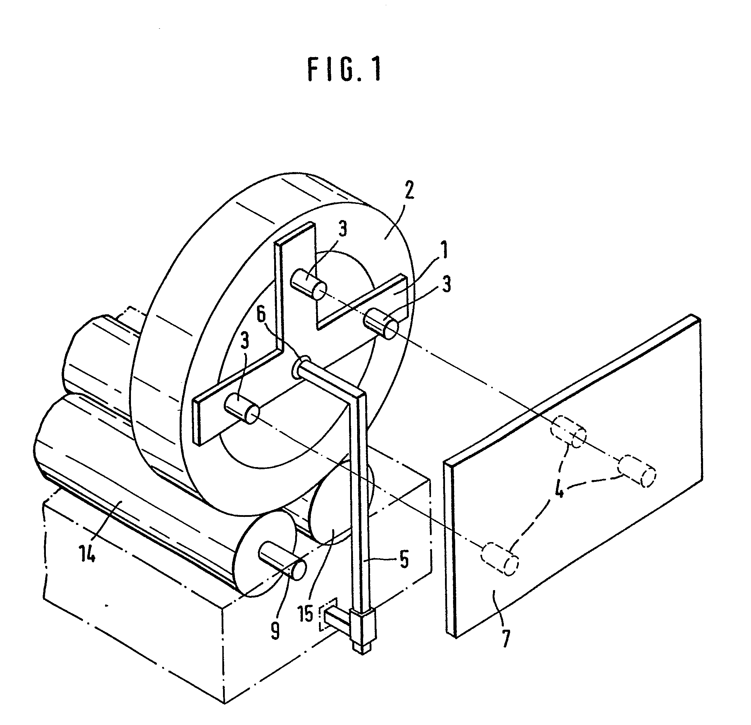

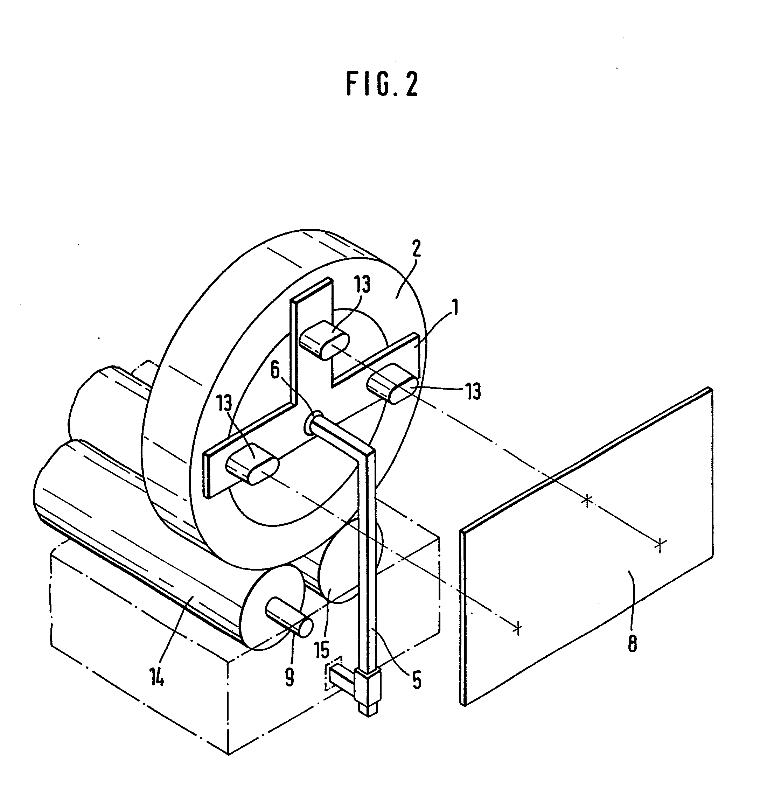

Ausführungsbeispiele für eine Vorrichtung nach der Erfindung sind in den Fig. 1 und 2 dargestellt.

- 4 -

Fig. 1 zeigt schematisch eine Vorrichtung, bei der als
prüfstandfeste Referenz Schallempfänger angeordnet sind;
Fig. 2 zeigt eine Vorrichtung, bei der als prüfstandfeste Referenz eine schallreflektierende Wand
dient.

Bei der Vorrichtung nach Fig. 1 ist an dem Rad 2, beispielsweise an dessen Reifen, ein Meßkopfhalter 1 angeordnet. Der Meßkopfhalter wird durch einen Arm 5 bewegt,
an dem er mittels einer Koppelvorrichtung 6 so befestigt
ist, daß er während der Messung drehbar, schwenkbar und
gegebenenfalls in axialer Richtung verschiebbar ist, so
daß durch den Arm 5 der Meßkopfhalter nicht behindert
ist, allen Bewegungen des Rades zu folgen. An dem Meßkopfhalter sind die Sender 3 angeordnet. Als prüfstandfeste Referenz dienen die Empfängereinheiten 4. Von
diesen Empfängereinheiten werden die von den Sendern 3
ausgesandten Ultraschallsignale aufgenommen, so daß der
jeweilige Abstand zwischen Sender und Empfänger gemessen
werden können. Zur genauen Bestimmung der Radebene muß
das Rad 2 gedreht werden. Zu diesem Zweck ist eine
Vorrichtung vorgesehen, die aus einer Antriebsrolle 14
und einer Umlenkrolle 15 besteht, durch deren Drehung
das Rad 2 gedreht werden kann. Ein Winkelgeber 9 erfaßt
den zugehörigen Drehwinkel.

Bei der Ausführungsform nach Fig. 2 ist der Meßkopfhalter 1 in gleicher Weise wie bei der Ausführungsform nach
Fig. 1 am Rad 2 befestigt. In diesem Fall befinden sich
am Meßkopfhalter die Einheiten 13, die gleichzeitig Schallsender und Schallempfänger sind, und als prüfstandfeste Referenz dient eine schallreflektierende Wand 8.
Die Messung kann mit dieser Vorrichtung in gleicher
Weise durchgeführt werden, wie mit der Vorrichtung nach
Fig. 1, mit dem Unterschied, daß die von den Empfängern
gemessenen Signale den doppelten Abständen entsprechen.

Die berührungslose Messung mittels Ultraschall hat
nicht nur den Vorteil, daß die Messung kräftefrei erfolgt, sondern hat den weiteren Vorteil, daß die
Messung auch bei größeren Radeinschlagwinkeln exakt
durchgeführt werden kann, wobei der Einschlagwinkel
ebenfalls an den Rechner gemeldet und von diesem rechnerisch berücksichtigt werden kann.

Bei der in Fig. 1 und Fig. 2 dargestellten Stellung des
Rades und des Meßkopfhalters befinden sich jeweils zwei
Sender in einer waagerechten Ebene. Der dritte Sender
liegt außerhalb dieser waagerechten Ebene in der senkrechten Ebene durch die Mitte zwischen den beiden Sendern in der waagerechten Ebene. In dieser Stellung
können ohne Raddrehung, wenn vorher die Radebene bestimmt wurde, Spur- und Sturzwinkeländerungen gemessen
werden. Zur Messung des Sturzwinkels kann aber das Rad
auch um 90° gedreht werden, so daß sich zwei Sender in
einer senkrechten Ebene befinden. Wird die Messung in
dieser Weise durchgeführt, so genügen zwei Sender.

Die ganze Vorrichtung ist so aufgebaut, daß der Ablauf
der Messungen vorprogrammiert werden kann, so daß es nur
der Betätigung eines Schalters bedarf und die Messung
läuft dann in der Weise ab, daß der Meßkopfhalter durch
die Vorrichtung 5 auf das Rad aufgesetzt wird, worauf

- 6 -

das Rad gedreht und in die zur Messung des Spurwinkels und Sturzwinkels erforderliche Lage gebracht und gleichzeitig die Sender eingeschaltet und die von den Empfängern gemessenen Werte an den Rechner gemeldet werden. Nach Beendigung der Messungen wird der Meßkopfhalter durch den Arm 5 wieder von dem Rad genommen.

0098920

Patentansprüche:

1. Vorrichtung zur Vermessung der Radebenen von Kraftfahrzeugen während der Drehung des Rades durch Messung des
   Abstandes eines oder mehrerer radfester Punkte von einer
   prüfstandfesten Referenz und zur Vermessung der Änderung
   der Radebene bei Spur- bzw. Sturzeinstellung durch
   Messung der Abstände mehrerer radfester Punkte von einer
   prüfstandfesten Referenz, dadurch gekennzeichnet, daß
   die Abstandsmessung berührungslos, vorzugsweise durch
   Ultraschall, erfolgt.

2. Vorrichtung nach Anspruch 1, dadurch gekennzeichnet, daß
   die prüfstandfeste Referenz aus einem oder mehreren,
   insbesondere drei in einer geeigneten Aufnahme (7)
   sitzenden Schallempfängern (4) besteht und am Rad (2)
   Schallsender (3) angeordnet sind.

3. Vorrichtung nach Anspruch 1, dadurch gekennzeichnet,
   daß die prüfstandfeste Referenz eine schallreflektierende Wand (8) ist und am Rad (2) Schallsender und Schallempfänger (13) angeordnet sind.

4. Vorrichtung nach Anspruch 2 oder 3, dadurch gekennzeichnet, daß die Schallsender (3) bzw. die Schallsender und
   Schallempfänger (13) an einem Meßkopfhalter (1) angeordnet sind, der auf das Rad (2) aufsetzbar ist.

5. Vorrichtung nach Anspruch 4, dadurch gekennzeichnet, daß der Meßkopfhalter (1)vorzugsweise an einem Arm (5) drehbar, schwenkbar und gegebenenfalls axial verschiebbar angeordnet ist.

6. Vorrichtung nach einem der Ansprüche 1 bis 5, dadurch gekennzeichnet, daß das Rad (2) durch eine Antriebsrolle (14) und eine Umlenkrolle (15) gedreht und die Drehung des Rades durch einen Winkelgeber (9) gemessen werden kann.

7. Vorrichtung nach einem der Ansprüche 1 bis 6, dadurch gekennzeichnet, daß bei mehreren Schallsendern (3, 13) die Schallsender zeitlich nacheinander betrieben werden.

8. Vorrichtung nach Anspruch 7, dadurch gekennzeichnet, daß jeder Schallempfänger (4, 13) die von jedem Schallsender (3, 13) gesendeten Signale empfängt und einzeln auswertet.

9. Vorrichtung nach einem der Ansprüche 1 bis 8, dadurch gekennzeichnet, daß die von den Schallempfängern (4, 13) ermittelten Abstände und der gemessene Drehwinkel des Rades an einen Rechner gemeldet werden.

10. Verfahren zur Vermessung der Radebenen, der Spur-und Sturzwinkel mittels einer Vorrichtung nach einem der Ansprüche 1 bis 9, dadurch gekennzeichnet, daß zuerst das Rad (2) durch die Antriebsrolle (14) um einen bestimmten Winkel gedreht und aus den dabei ermittelten Abständen die Lage der Radebene berechnet wird und dann das-------------------------------------------------

Rad in eine oder zwei bestimmte Stellungen gebracht wird, wobei die Sender (3) bzw. Sender-Empfänger (13) sich in einer waagerechten bzw. senkrechten Ebene befinden, die Abstände gemessen und aus den gemessenen Abständen Spur- und Sturzwinkeländerungen bei der Spur- und Sturzwinkeleinstellung errechnet werden.

11. Verfahren nach den Ansprüchen 1 bis 10, dadurch gekennzeichnet, daß die Abstände zusätzlich bei eingeschlagenen Rädern gemessen werden und der Spurdifferenzwinkel aus der Spuränderung der beiden Räder und der Nachlaufwinkel aus der Sturzwinkeländerung jedes Rades berechnet wird.

FIG.1

FIG. 2

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 358 313 (POLYPRODUKTE AG) * Figur 1; Seite 5, Zeilen 3-6 * | 1,4,6, 9,10 | G 01 B 7/315 G 01 S 15/88 |
| A | DE-A-2 236 693 (R. MacPHERSON et al.) * Figur 1 * | | |
| A | US-A-4 099 333 (B.M. FORSTER) * Figuren 1, 5, 6 * | | |

RECHERCHIERTE SACHGEBIETE (Int. Cl. 3)

G 01 B 7/315
G 01 B 17/00
G 01 S 15/88

Der vorliegende Recherchenbericht wurde für alle Patentansprüche erstellt.

| Recherchenort | Abschlußdatum der Recherche | Prüfer |
|---|---|---|
| BERLIN | 23-09-1983 | BREUSING J |